# FASCICULE DE BREVET EUROPEEN

(11) **EP 3 149 746 B1**
(45) Date de publication et mention de la délivrance du brevet: **13.06.2018**
(21) Numéro de dépôt: 15725586.0
(22) Date de dépôt: 26.05.2015
(51) Int. Cl.: B22F 3/03, B30B 15/00, B30B 15/02, B30B 15/04, B30B 15/30, G21C 21/02, B30B 11/02

(54) **PRESSE POUR METTRE EN FORME DES PASTILLES DANS UN ENVIRONNEMENT RESTREINT ET HOSTILE ET PROCEDE D'ASSEMBLAGE DE LA PRESSE**
PRESSE ZUM FORMEN VON PELLETS IN EINER BEGRENZTEN UND RAUEN UMGEBUNG UND VERFAHREN ZUR MONTAGE DER PRESSE
PRESS FOR SHAPING PELLETS IN A RESTRICTED AND HOSTILE ENVIRONMENT AND METHOD FOR ASSEMBLING THE PRESS

(30) Priorité: 27.05.2014 FR 1454780
(43) Date de publication de la demande: 05.04.2017
(73) Titulaire: Commissariat à l'Énergie Atomique et aux Énergies Alternatives, 75015 Paris (FR); Champalle, 01960 Peronnas (FR)
(72) Inventeur: BAYLE, Jean-Philippe, F-30400 Villeneuve les Avignon (FR); MOYER, Patrick, F-30200 Bagnols sur Ceze (FR); BRENNEIS, Christophe, F-30290 Saint Victor la Coste (FR); GOSSET, Patrik, F-01160La Tranclière (FR); BAPTISTE, Patrick, F-01310 Saint Martin le Chatel (FR); LAGER, Didier, F-01390 Mionnay (FR)
(74) Mandataire: Brevalex
(86) Numéro de dépôt international: PCT/EP2015/061513
(87) Numéro de publication internationale: WO 2015/181121

(56) Documents cités:
- EP-A2- 0 347 303
- US-A1- 2014 004 220

## Description

Le sujet de l'invention est une presse pour mettre en forme des pastilles dans un environnement restreint et hostile.

Elle est du genre comprenant une matrice et deux poinçons alignés, pénétrant tour à tour dans la matrice pour y comprimer de la poudre qui a été versée et la rendre compacte, puis pour extraire la pastille hors de la matrice. Diverses industries recourent à des presses de ce genre, dont la pharmacie et l'industrie nucléaire, pour la fabrication de pastilles de combustible. De nombreux genres de presses ont été publiées dans l'art, parmi lesquelles on pourra citer le document DE 10 2010 033988 A.

On s'intéresse ici à la construction d'une presse compacte et qu'on puisse notamment utiliser dans le volume réduit d'un caisson blindé. Cette presse devra de plus être modulaire de manière à pouvoir être introduite par modules dans le caisson, par des ouvertures étroites, de 240 mm de diamètre par exemple ; les modules devront ensuite être assemblés dans le caisson blindé pour former la presse avec des possibilités réduites de manipulation dues au petit nombre d'outils disponibles et à l'impossibilité d'exécuter des gestes précis ou de grande force.

Sous une forme générale, l'invention est relative à une presse du genre comprenant : une matrice dans laquelle des pastilles sont mises en forme par compression ; un premier poinçon dit poinçon supérieur et un second poinçon dit poinçon inférieur, le poinçon supérieur et le poinçon inférieur étant alignés avec la matrice et pénétrant dans la matrice par des extrémités opposés de la matrice pour comprimer les pastilles et les démouler de la matrice; un plateau inférieur auquel le poinçon inférieur est assujetti ; des colonnes parallèles, également assujetties au plateau inférieur; un plateau de matrice et un plateau de poinçon supérieur auxquels la matrice et le poinçon supérieur sont respectivement assujettis, et qui sont enfilés en coulissant sur les colonnes ; un moteur supérieur déplaçant le plateau de poinçon supérieur et un moteur inférieur déplaçant le plateau de matrice par des parties d'actionnement (ces caractéristiques étant aussi présentes dans le document antérieur US 2014/004220). L'invention est d'abord originale en ce que les parties d'actionnement des moteurs sont réunies au plateau de matrice et au plateau de poinçon supérieur par des liaisons démontables comprenant des vis, le poinçon supérieur est réuni au plateau de poinçon supérieur par des liaisons démontables comprenant des vis, et le poinçon inférieur est réuni au plateau inférieur par des liaisons démontables comprenant des vis. Et la partie d'actionnement du moteur inférieur comprend une tige d'actionnement, et une genouillère réunie au plateau de matrice et à la tige d'actionnement du moteur inférieur, la tige d'actionnement étant à un angle non nul avec les colonnes, pouvant notamment être un angle droit.

Les liaisons entre modules, étant toutes des liaisons vissées, peuvent être établies et défaites sans difficultés en travaillant à travers la paroi d'un caisson blindé par un bras de télémanipulation ou en utilisant des gants, de sorte que l'assemblage de la presse et son démontage, pour des raisons d'entretien par exemple, deviennent possibles. La genouillère permet la conversion de mouvements latéraux de la tige d'actionnement du moteur inférieur en mouvements verticaux du plateau de la matrice, de déporter le moteur inférieur à côté du plateau inférieur et de réduire encore l'encombrement global de la presse. Le moteur inférieur est alors avantageusement porté par un support latéral réuni à une face périphérique du plateau inférieur, par une autre liaison comprenant des vis démontables, et appartient à un autre module composant la presse.

L'assemblage est complété par des ajustements par emboîtement comprenant en particulier l'enfilage de plusieurs plateaux sur les colonnes, ce qui ne soulève pas plus de difficulté. La presse se décompose donc en une série de modules, d'abord séparés, puis superposés sur les colonnes, et en d'autres modules, d'abord séparés eux aussi, puis assemblés successivement aux modules précédents. Tous ces modules peuvent être de petites dimensions, pour respecter les contraintes d'introduction dans des ouvertures étroites. Les colonnes peuvent faire exception par leur hauteur assez grande, mais elles peuvent être introduites tout aussi facilement par les ouvertures étroites, à cause de leur finesse.

Les modules peuvent être rendus plus facilement télémanipulables, en leur ajoutant des tiges ou des poignées de préhension, des anneaux de levage, etc., qui peuvent d'ailleurs être amovibles par des dévissages ; quelques exemples seront donnés.

D'autres modules que ceux qu'on a mentionnés ci-dessus, et qui sont assemblés au reste de la presse par d'autres liaisons démontables du même genre, sont concevables.

Une difficulté particulière est la mise en place correcte des poinçons, en réduisant les risques de les endommager par de mauvaises manipulations. Cette difficulté peut être résolue si la presse comprend un support mobile commun au bloc de matrice, au poinçon inférieur et au poinçon supérieur, qui lui sont réunis par des vis démontables, ce support mobile étant utilisé seulement pendant le transport des modules de la presse et leur assemblage, et étant retiré une fois que la presse a été assemblée et mise à un état de fonctionnement ; le bloc de matrice est une portion détachable d'une partie complémentaire du plateau de matrice, et il est assujetti à cette partie complémentaire par une liaison à glissière et des liaisons démontables comprenant des vis. Avec une telle disposition, le support mobile maintient les poinçons à une position invariable par rapport au bloc de matrice, pendant que celui-ci est inséré dans la partie complémentaire du plateau de matrice ; les poinçons peuvent ensuite être bridés au plateau supérieur et au plateau inférieur une fois qu'on a approché ceux-ci avec précaution avant d'être libérés par le démontage du support mobile.

Selon une disposition avantageuse pour constituer les liaisons mentionnées, le poinçon supérieur, la partie d'actionnement du moteur supérieur et le poinçon supérieur sont munis d'épaulements d'appui sur le plateau de matrice et le plateau inférieur, et leurs liaisons comprennent des brides pressant sur les épaulements et réunies au plateau de matrice et au plateau inférieur par des vis.

Les colonnes peuvent être vissées au plateau inférieur pour permettre de les introduire séparément dans le caisson blindé et accentuer le caractère modulaire de la presse.

L'utilisation d'huile est proscrite dans des applications importantes de l'invention. Il est alors envisagé que la presse soit électro-mécanique, le moteur inférieur et le moteur supérieur étant électriques, et soient reliés aux parties d'actionnement par des mécanismes à vis à rouleaux satellites.

Un aspect intéressant de l'invention est aussi relatif à un remplissage automatisé et fiable de la matrice en poudre à chaque pressage. La presse comprend alors un module de remplissage de la matrice, le module de remplissage comprenant un support assemblé au plateau de matrice par des vis , une pièce mobile par rapport au plateau et glissant sur le plateau de matrice et comprenant un perçage, et un conduit d'alimentation, le perçage étant disposé de façon à passer sous le conduit d'alimentation et sur la matrice pendant des déplacements de la pièce mobile. Elle peut comprendre aussi un module de chargement, comprenant un embout vissé à une partie supérieure du conduit d'alimentation, un entonnoir articulé à l'embout autour d'un axe, l'entonnoir comprend un évidement croisant l'axe, et des moyens d'accrochage de pots de remplissage sur une ouverture d'un passage de l'entonnoir.

Un autre aspect de cette invention est un procédé d'assemblage d'une telle presse, qui justifie les particularités précédentes de sa construction.

Cette presse est avant tout conçue pour un emploi dans une enceinte en milieu hostile, à volume restreint, reliée à l'extérieur seulement à travers des passages resserrés (bien qu'il soit évidemment possible de l'utiliser ailleurs). Avant d'être assemblée, la presse se présente donc sous l'aspect d'un certain nombre de modules complètement séparés, dont les dimensions sont suffisamment petites pour passer à travers le passage menant à l'enceinte (quelques dizaines de centimètres de diamètre, par exemple). Les modules sont donc introduits les uns après les autres dans l'enceinte, avant d'y être assemblés, et ils le sont par des télémanipulateurs, dont les possibilités de mouvements sont réduites et les mouvements sont d'ailleurs imprécis.

Un autre aspect de l'invention est un procédé d'assemblage mené de cette façon. L'assemblage s'effectue principalement ou même exclusivement par des mouvements coulissants des modules pour les approcher les uns des autres de façon précise, avant de les joindre. Les attaches se font par des vissages. Les télémanipulateurs peuvent aussi procéder à des insertions et des enlèvements d'entretoises temporaires, afin de maintenir temporairement des modules à une position déterminée, jusqu'à ce qu'ils soient assemblés complètement aux autres. Certains des modules peuvent comprendre respectivement le plateau inférieur, le plateau de poinçon supérieur et le plateau de matrice. D'autres des modules peuvent comprendre le moteur supérieur, le moteur inférieur et, éventuellement, les colonnes, la genouillère, le bloc de matrice, le module de remplissage et le module de chargement.

Une réalisation particulière de l'invention sera maintenant décrite complètement en liaison aux figures, dont :
- les figures 1A, 1B, 1C, 1D et 1E détaillent les étapes de fonctionnement de la presse ;
- les figures 2A et 2B illustrent les constituants principaux de la presse d'après deux incidences opposées ;
- les figures 3A et 3B illustrent la presse en plus grand détail, et en particulier les liaisons entre modules, encore d'après deux incidences opposées ;
- les figures 4A, 4B, 4C, 4D, 4E et 4F illustrent différents modules de la presse à un état démonté ;
- la figure 5 représente, en coupe partielle, une disposition particulière de poinçon inférieur;
- la figure 6 est une représentation détaillée de la matrice, comprenant encore cette disposition de poinçon inférieur ;
- les figures 7A, 7B et 7C illustrent un dispositif d'alimentation en poudre ;
- la figure 8 illustre le mécanisme de distribution de poudre et d'éjection des pièces formées ;
- et la figure 9 est un détail de ce mécanisme.

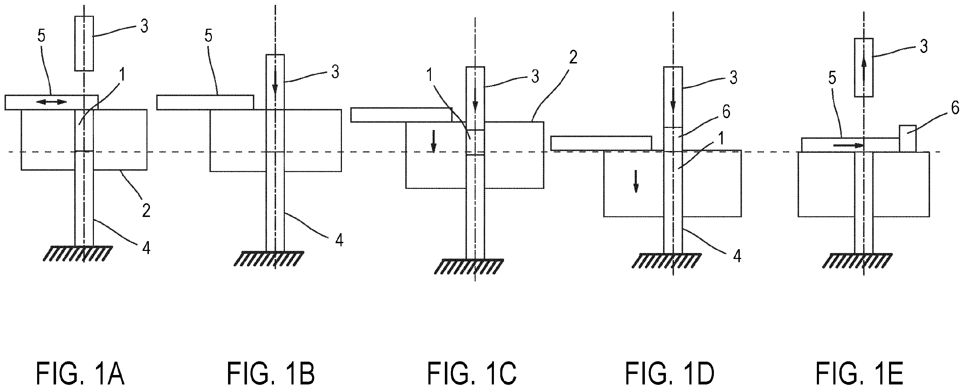

On reviendra brièvement sur un mode possible de fabrication des pastilles, effectuée au moyen des figures 1A à 1E. Une matrice 1 de forme cylindrique est creusée dans un plateau de matrice 2 et s'ouvre à ses faces supérieure et inférieure (figure 1A). Un poinçon supérieur 3 et un poinçon inférieur 4 sont alignés de part et d'autre de la matrice 1. Le poinçon inférieur 4 pénètre toutefois toujours dans la matrice 1, alors que le poinçon supérieur 3 est soulevé au-dessus d'elle à l'origine. Il est alors possible d'approcher un sabot de remplissage 5 sur le plateau de matrice 2, de manière à emplir la matrice 1 de poudre. A l'étage suivante (figure 1B), le sabot de remplissage 5 étant écarté de côté, le poinçon supérieur 3 est abaissé de manière à entrer progressivement dans la matrice 1 (figure 1C) et à comprimer la poudre présente, jusqu'à la rendre compacte et former une pastille 6. Le plateau de matrice 2 peut être abaissé simultanément, d'une quantité moindre, afin de diminuer les efforts dus aux frottements dans la matrice 1. A l'étape suivante (figure 1D), le plateau de matrice 2 est abaissé, les poinçons 3 et 4 restant en place, ce qui permet de démouler la pastille 6 de la matrice 1, désormais complètement occupée par le poinçon inférieur 4. Enfin (figure 1E), le piston supérieur 3 est remonté et le sabot de remplissage 5 de nouveau avancé, cette fois pour repousser la pastille 6 jusqu'à un dispositif de récupération. D'autres modes de fabrication des pastilles sont évidemment possibles.

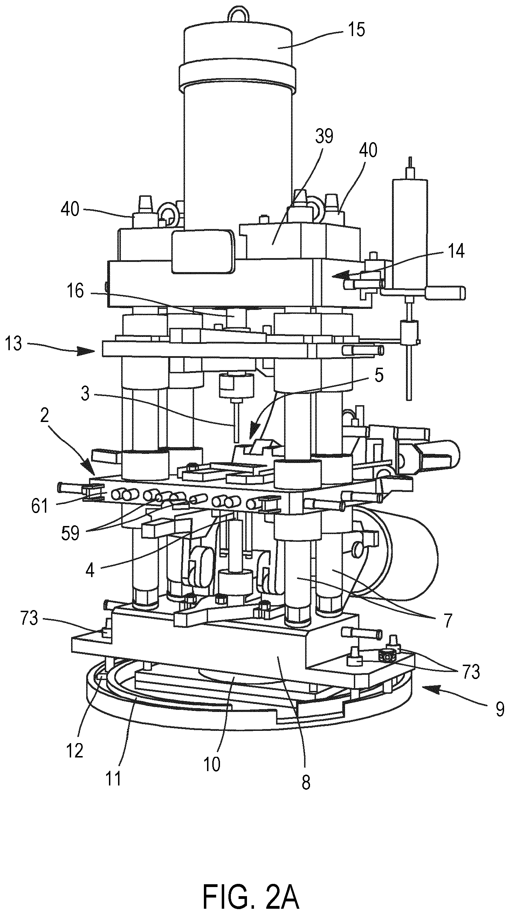

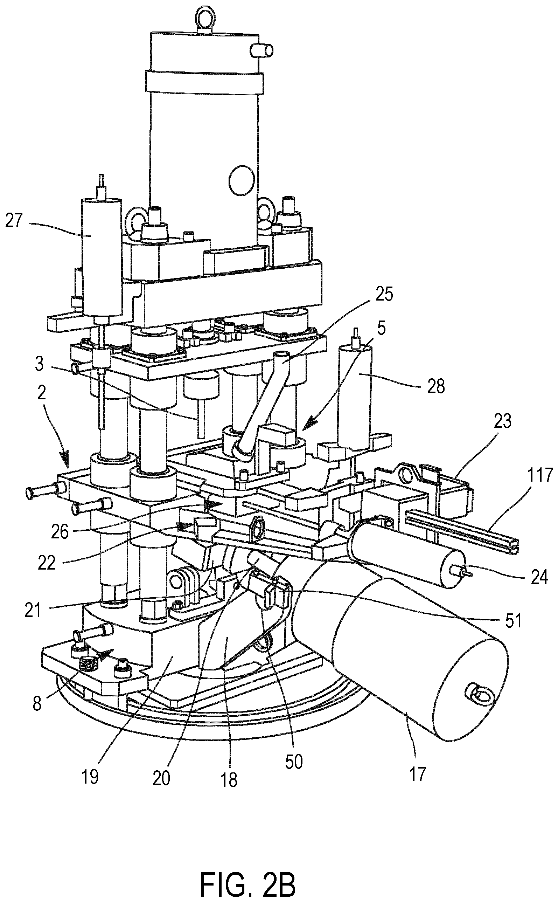

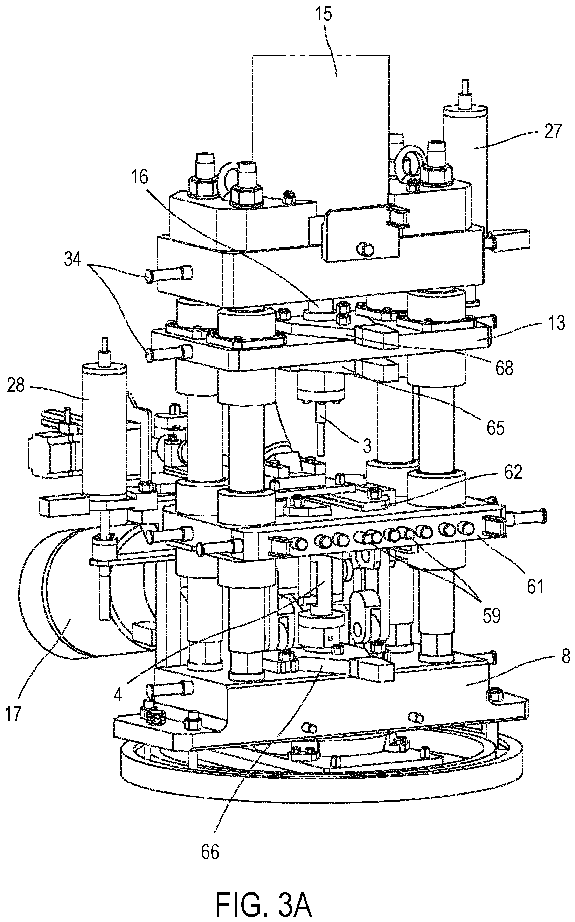

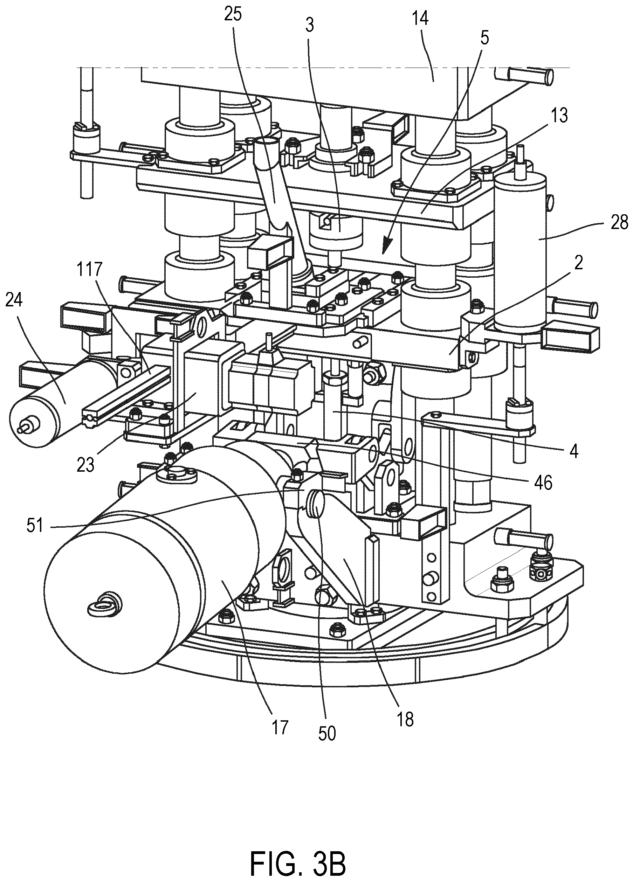

On se reporte d'abord aux figures 2A et 2B, dont on complétera ensuite la description au moyen de figures 3A et 3B qui donnent des détails plus nombreux de la réalisation. Le plateau de matrice 2 coulisse sur quatre colonnes 7, disposées en rectangle et orientées en direction verticale. Le poinçon inférieur 4 est monté sur un plateau inférieur 8, où sont implantées aussi les colonnes 7. Le plateau inférieur 8 est ici pivotant, monté sur un socle 9 fixe, comprenant un pivot 10 central et un rail 11 circulaire et creux. Le plateau inférieur 8 est muni d'une empreinte, qui s'ajuste sur le pivot 10, et possède des patins 12 s'ajustant dans le rail 11. La rotation peut être accomplie pour faciliter le montage et le démontage de la presse en la tournant quand nécessaire.

Les patins 12 sont munis de vis 73 de verrouillage, qui permettent de les serrer dans le rail 11 pour immobiliser le plateau inférieur 8 et le reste de la presse pendant la fabrication des pastilles.

Le piston supérieur 3 dépend d'un plateau de poinçon supérieur 13, qui coulisse aussi sur les colonnes 7. Un plateau supérieur 14 est monté immobile au sommet des colonnes 7. Un moteur supérieur 15, monté sur le plateau supérieur 14, déplace le plateau de poinçon supérieur 13 et le poinçon supérieur 3 par le mouvement d'une partie d'actionnement 16, et de même un moteur inférieur 17 déplace le plateau de matrice 2. Le moteur inférieur 17 est monté sur un support latéral 18, fixé à une face périphérique 19 du plateau inférieur 8, encore par une liaison démontable à vis 70 (figure 3B) de manière que sa partie d'actionnement 20 est essentiellement horizontale, en tout cas à angle non nul avec les colonnes 7 verticales. Son mouvement horizontal est converti en mouvement vertical par une genouillère 21, reliant la partie d'actionnement 20, au plateau de matrice 2.

Le sabot de remplissage 5 est monté sur un support 22, fixé au plateau de matrice 2 par des vis démontables 72, de même qu'un moteur 23 de déplacement du sabot de remplissage 5 et un capteur 24 de déplacement dudit sabot ; ce dernier est par ailleurs muni d'un système de chargement de poudre, comprenant, en particulier, un conduit d'alimentation 25 et pouvant être raccordé à un module d'alimentation décrit plus loin, et d'un pot de récupération de poudre en excès 26 situé sous lui. Un capteur de déplacement supérieur 27 est par ailleurs disposé entre le plateau supérieur 14 et le plateau de poinçon supérieur 13, et un capteur de déplacement inférieur 28, entre le plateau inférieur 8 et le plateau de matrice 2.

Un aspect essentiel de l'invention est que la presse est composée de modules de petites dimensions, pouvant être assemblés et démontés facilement dans un caisson blindé, sans possibilités importantes de manipulation et sans outillage complexe. Des liaisons démontables à vis sont constamment utilisées pour cela.

Tous les modules pouvant être introduits par la même ouverture du caisson, qui peut avoir 240 mm de diamètre par exemple, leurs dimensions sont donc inférieures, sauf éventuellement dans leur direction d'introduction, à travers l'ouverture.

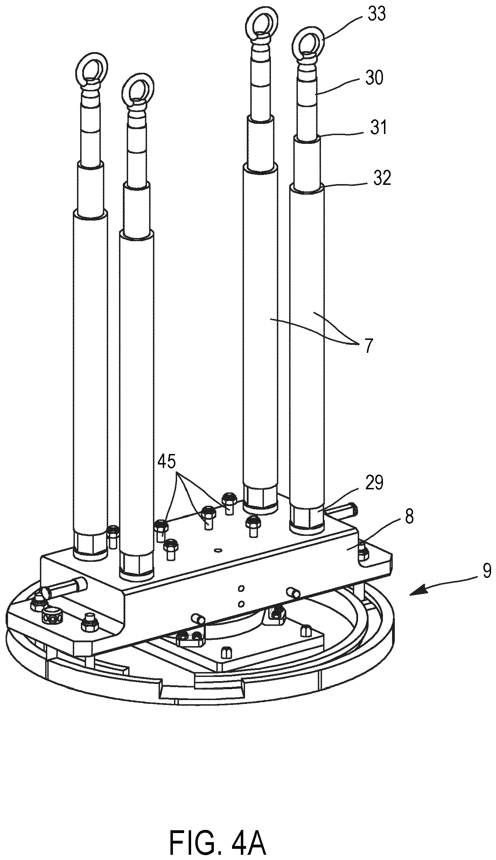

Le plateau inférieur 8 constitue l'un de ces modules. La figure 4A représente un état initial, où il vient d'être posé sur le socle 9 et où les colonnes 7 lui sont assemblées. Elles ont été toutefois introduites séparément dans le caisson blindé, et elles sont assemblées au socle 8 par des jonctions filetées. Leur extrémité inférieure est munie pour cela de sections à vis à têtes hexagonales 29 permettant de les visser. Les colonnes 7 possèdent également des extrémités filetées 30 à leur extrémité supérieure, ainsi que des épaulements 31 et 32, qui agrandissent leur section, juste au-dessous de l'extrémité supérieure ; des écrous à anneau 33 sont vissés sur les parties filetées 30, afin de permettre la manipulation des colonnes 7 avant leur montage, et ils peuvent être enlevés ensuite.

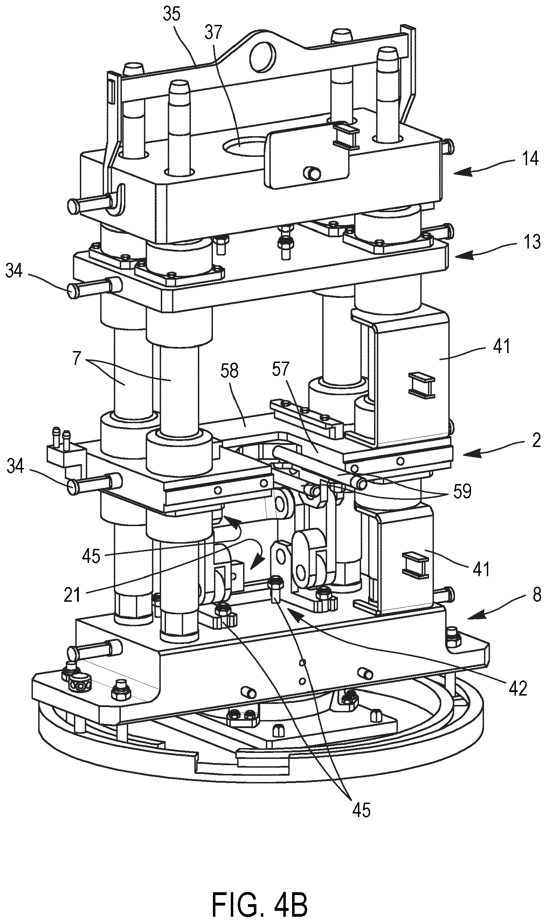

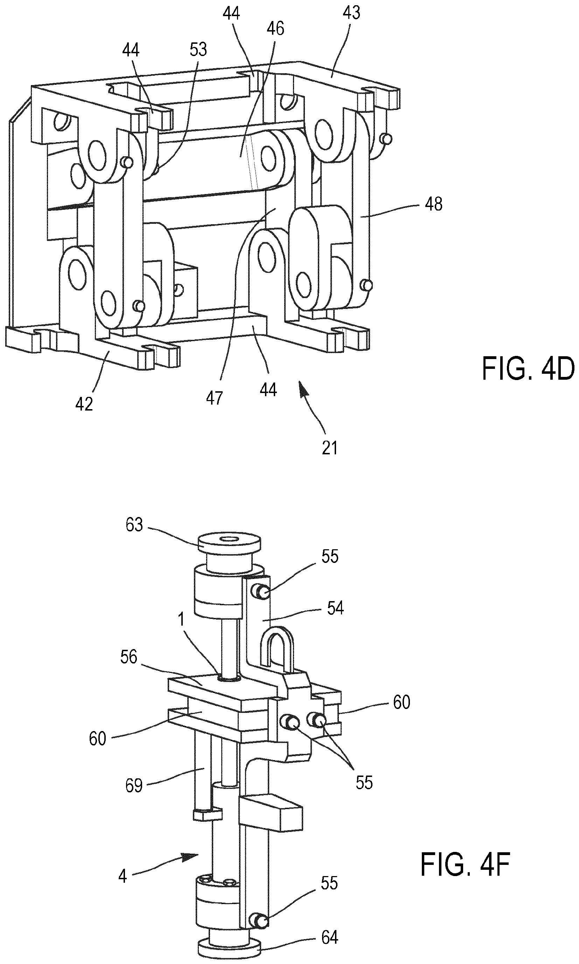

On aborde à présent la description de la figure 4B, qui représente un état de montage incomplet de la presse. Un autre module de la presse est constitué par le plateau supérieur 14, qu'on installe sur les colonnes 7 une fois que le plateau de matrice 2 et le plateau de poinçon supérieur 13 y ont aussi été installés. Tous ces plateaux sont munis de perçages, qui permettent de les enfiler sur les colonnes 7, et les perçages du plateau supérieur 14 sont plus fins que ceux des autres, de manière que le plateau supérieur 14 est retenu sur les épaulements 32 inférieurs. L'état de montage correspondant est représenté à la figure 4D. On remarque que les plateaux comportent tous une tige de préhension latérale 34, permettant leur préhension et leur maintien à une position horizontale par un palan 35, présent dans le caisson blindé et représenté seulement partiellement.

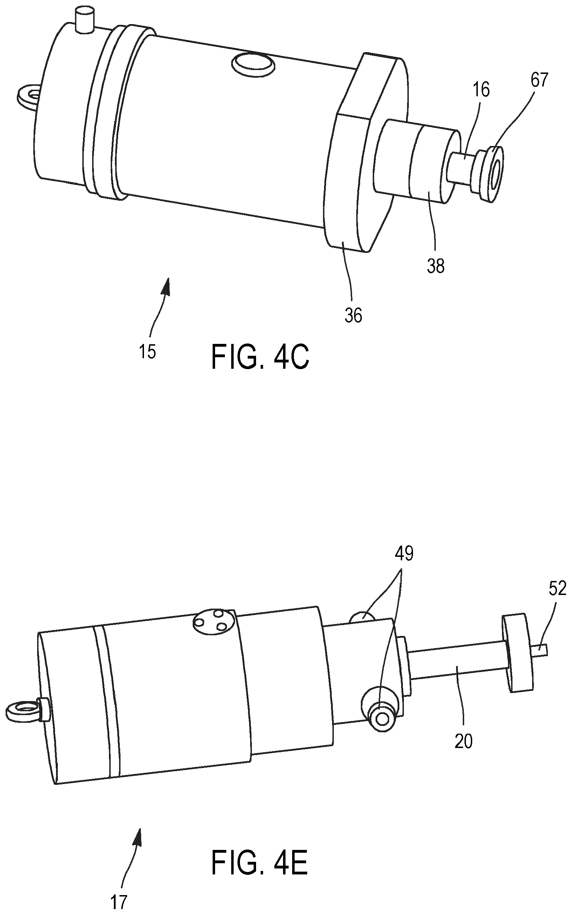

Le moteur supérieur 15 constitue un autre module de la presse, et il peut être mis en place une fois que le palan 35 a été retiré. La figure 4C montre qu'il possède une collerette 36, par laquelle il peut être posé verticalement sur le plateau supérieur 14. Une douille de centrage 38 s'étendant sous la collerette 36 pénètre dans un alésage central 37 du plateau supérieur 14 et ajuste la position latérale du moteur supérieur 15, et la partie d'actionnement 16 dépasse alors sous le plateau supérieur 14. De plus, la collerette 36 a été vissée préalablement à une bride 39 (figure 2A), munie d'anneaux de préhension 71, et de perçages permettant de l'enfiler elle aussi sur les colonnes 7. Le montage du moteur supérieur 15 s'effectue en passant la bride 39 sur les épaulements 31 supérieurs. Des écrous 40 peuvent alors être vissés sur les extrémités filetées 30 des colonnes 7, pour maintenir la bride 39 et le plateau supérieur 14. Le module, composé principalement du moteur supérieur 15 et de la bride 39, est donc facile lui aussi à transporter et à assembler au reste de la presse, et ses divisions sont toutes modérées. Revenant à la figure 4B, on voit que des éclisses 41 sont intercalées entre le plateau inférieur 8, le plateau de matrice 2, et le plateau de poinçon supérieur 13, pour maintenir ces derniers à des hauteurs déterminées.

Un autre module est constitué par la genouillère 21, représentée à la figure 4D. Elle comporte un étrier inférieur 42 et un étrier supérieur 43, comprenant chacun deux branches latérales pointant vers un même côté et une branche médiane qui réunit les précédentes, les différentes branches étant munies de redans 44, s'ouvrant tous vers le même côté, afin de pouvoir pousser latéralement la genouillère 21, en la faisant glisser sur le plateau inférieur 8, jusqu'à ce que des vis 45 (figure 4B), installées à des positions desserrées sur le plateau inférieur 8 et sous le plateau de matrice 2, entrent dans les redans 44 respectifs de l'étrier inférieur 42 et de l'étrier supérieur 43. L'étrier inférieur 42 sera ensuite assujetti au plateau inférieur 8 et l'étrier supérieur 43 au plateau de matrice 2, une fois que l'éclisse 41 inférieure aura été enlevée, ce qui permettra la descente du plateau de matrice 2 jusqu'au contact de l'étrier supérieur 43 et le serrage des vis 45.

La genouillère 21 comprend encore un étrier médian 46, disposé à une hauteur intermédiaire aux étriers 42 et 43 et s'étendant transversalement, une paire de leviers coudés 47, articulés aux extrémités de l'étrier médian 46 à une extrémité, à l'étrier inférieur 42 à leur centre, et à des leviers rectilignes 48 à leur extrémité opposée ; et les leviers rectilignes 48 sont articulés à l'étrier supérieur 43. On voit qu'un mouvement horizontal, poussant sur l'étrier médian 46, produit un basculement des leviers coudés 47, et une élévation des leviers rectilignes 48, qui soulèvent alors l'étrier supérieur 43, et par conséquent le plateau de matrice 2.

Ce mouvement est accompli par le moteur inférieur 17, qui constitue un autre module de la presse et est représenté séparément à la figure 4E. La partie antérieure, adjacente à la partie d'actionnement 20, comporte des pivots 49, qui s'ajustent dans des encoches 50 semi-circulaires du support latéral 18, après quoi des brides 51 peuvent être vissées sur les pattes du support latéral 18, de manière à retenir définitivement les pivots 49. Le moteur inférieur 17 est alors monté pivotant sur le support latéral 18. L'extrémité de la partie d'actionnement 20 comporte une tige filetée 52, qui peut être retenue à travers un perçage 53 (figure 4D) de l'étrier médian 46, par le vissage d'un écrou en donnant ainsi une autre liaison démontable à vis. Les mouvements coulissants de la partie d'actionnement 20, essentiellement horizontaux, produisent des mouvements verticaux du plateau de la matrice 2, par l'intermédiaire de la genouillère 21.

Les poinçons 3 et 4 n'ont pas encore été montés. A l'état de la figure 4B, ils font partie d'un autre module d'assemblage de la presse, avec, de façon notable, la matrice 1 ; et ce module est représenté à la figure 4F. Ils sont en effet montés sur un support mobile 54, par l'intermédiaire de vis 55. La matrice 1 appartient en réalité à un bloc de matrice 56, qui fait partie du plateau de matrice 2, en entrant dans une découpe 57 d'une partie complémentaire 58 de ce plateau de matrice 2, qui est en réalité seule installée à l'état de la figure 4B. La partie complémentaire 58 porte des glissières 59 de guidage, et le bloc de matrice 56 porte des rainures 60 latérales, qui permettent de l'enfiler sur les glissières 59. Quand cette opération est accomplie, la position du bloc de matrice 56 par rapport à la partie complémentaire 58 est assurée par le serrage de vis 129 d'une bride latérale 61 (figure 3A), qui couvre le côté de la partie complémentaire 58 où s'ouvre la découpe 57 sur la partie complémentaire 58, ce qui empêche alors l'extraction du bloc de matrice 56, de brides supérieures 62, vissées à la face supérieure de la partie complémentaire 58 et s'étendant au-dessus de la découpe 57, et de brides inférieures semblables, mais disposées sous la face inférieure de la partie complémentaire 58. En serrant les vis 130 des brides supérieures et inférieures 62, le bloc de matrice 56 est retenu à la même hauteur que la partie complémentaire 58.

Le poinçon supérieur 3 et le poinçon inférieur 4 portent respectivement un épaulement 63 et 64 à leur extrémité arrière (figure 4F). Des brides en forme de fourchette, respectivement 65 et 66, sont vissées par des vis 131 sous le plateau de poinçon supérieur 13 et sur le plateau inférieur 8, pour retenir les épaulements 63 et 64 en appui sur ces surfaces, et rendre donc les poinçons 3 et 4 solidaires de ces plateaux. De même, la partie d'actionnement 16 du moteur supérieur 15 comprend un épaulement 67 à son extrémité, qu'une autre bride en forme de fourchette 68, vissée par des vis 132 à la surface supérieure du plateau de poinçon supérieur 13, maintient contre cette surface : le moteur supérieur 15 peut alors entraîner le poinçon supérieur 3.

Les éclisses 41 (figure 4B) sont enlevées quand le plateau de matrice 2 et le plateau de poinçon supérieur 13 sont retenus par le moteur supérieur 15 et le moteur inférieur 16. Les capteurs de mouvements 27 et 28 sont installés alors, toujours par des vissages de leurs éléments. Le support 22 du sabot de remplissage 5 est installé et vissé sur le plateau de matrice 2. Les vis 55 du support mobile 54 sont enlevées, et le support mobile 54 est lui-même retiré : le poinçon supérieur 3 et le poinçon inférieur 4 sont libres d'aller et venir, et la presse est alors en état de fonctionnement. On mentionnera que les poinçons 3 et 4 sont munis de capteurs d'efforts.

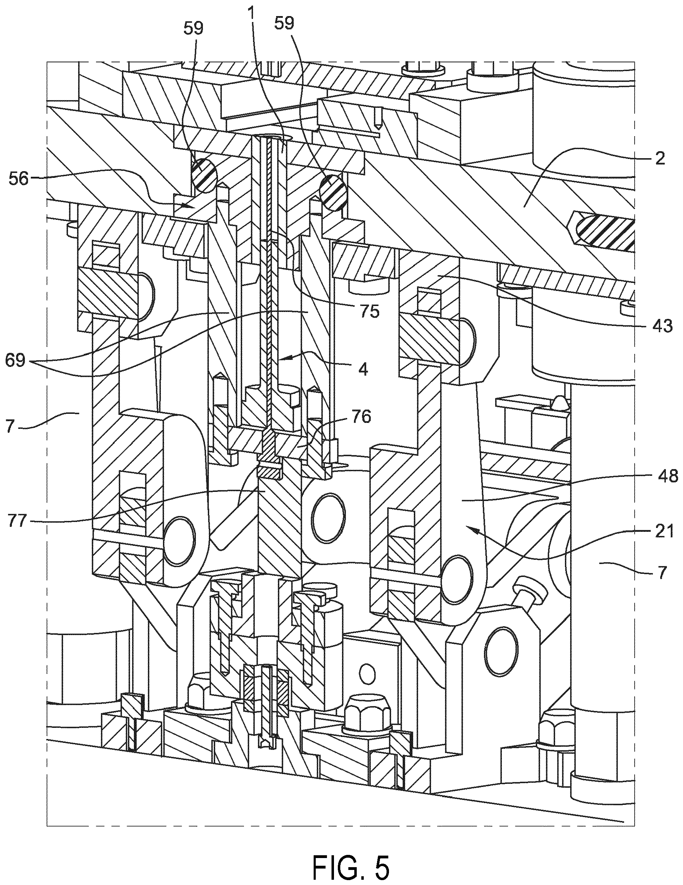

On se reporte à la figure 5, pour un complément de description du module portant la matrice 1 et les poinçons 3 et 4. Le mode de réalisation de l'invention peut être appliqué à la mise en forme de pastilles annulaires, évidées à leur centre. Une aiguille centrale 75 est alors disposée dans ce module, en coulissant à travers la partie supérieure du poinçon inférieur 4, et en en dépassant vers le haut. L'aiguille centrale 75 est retenue par vissage dans une barre transversale 76, elle-même suspendue à deux tirants 69, vissés sous le bloc de matrice 56. La partie inférieure du poinçon inférieur 4 comporte un évidement 77 pour permettre un mouvement de la barre transversale 76. L'aiguille centrale 75 affleure au sommet de la matrice 1. Le procédé de fabrication des pastilles peut alors être explicité comme ceci. Le poinçon supérieur 3 est enfoncé dans la matrice 1, dans la position du dispositif représentée à la figure 5, pour comprimer la poudre et former la pastille ; il est évidé en son centre, comme la partie supérieure du poinçon 4, afin que l'aiguille centrale 75 puisse aussi γ coulisser. Quand la compression est achevée, le poinçon supérieur 3 est soulevé et dégage la matrice 1, puis la genouillère 21 est basculée pour abaisser le plateau de matrice 2 et laisser le poinçon inférieur 3 s'enfoncer dans la matrice 1 et se charger de l'extraction de la pastille, puisque le poinçon inférieur 4 est immobile. La barre transversale 76 descend dans l'évidement 77, et l'aiguille centrale 75 reste solidaire de la matrice 1 et descend dans le poinçon inférieur 4. Le mouvement inverse est ensuite effectué pour ramener le dispositif à la position initiale. Contrairement à certains dispositifs connus, l'aiguille centrale n'est pas associée à un moteur propre, pour la déplacer par rapport à la matrice 1. On simplifie ainsi le dispositif, tout en réduisant les efforts sur l'aiguille centrale 75, puisqu'elle reste immobile pendant la compression de la poudre. Il est de même avantageux que l'aiguille centrale 75 ne soit pas solidaire du poinçon inférieur 4, comme dans certaines conceptions, puisque cela soulève des difficultés au moment de l'éjection des pastilles.

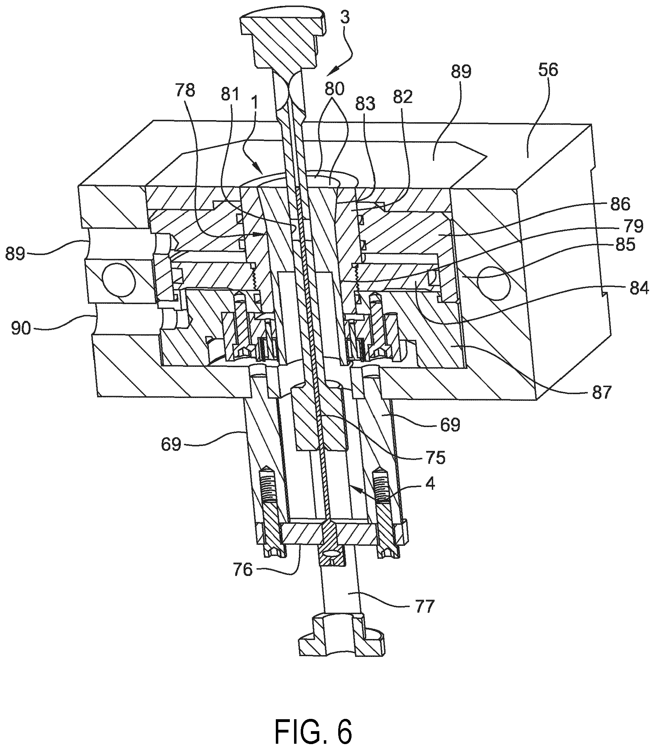

D'autres détails encore sont montrés à la figure 6. Un dispositif peut être ajouté pour faciliter l'extraction des pastilles; il est décrit, sous une forme un peu différente, dans le document FR-2 942 733-A.

Le bloc de matrice 56 possède une structure complexe au centre. La matrice 1 comprend une pièce centrale 78, composée d'une base 79 inférieure cylindrique, et de secteurs 80 disposés en cercle et d'une pièce avec la base 79. Les secteurs 80 sont jointifs à une position de fermeture, proche d'un état libre, et forment donc une surface interne de moulage 81 continue.

Une gaine 82 est coulissante autour de la pièce centrale 78, en direction verticale, et elle touche la face extérieure des secteurs 80, par une interface conique 83. Elle est unie à un plateau de piston 84, qui l'entoure et coulisse dans une chambre 85, entre une bride supérieure 86 et une bride inférieure 87, empilées l'une sur l'autre dans une empreinte du bloc de matrice 56 et serrées par un couvercle 88, qui rétabli la planéité et la continuité de la face supérieure du bloc de matrice 56. Des alimentations en air comprimé 89 et 90 traversent le bloc de matrice 56 et aboutissent dans la chambre 85, respectivement à travers les brides 86 et 87.

On a représenté le dispositif à l'état de compression des pastilles, l'une d'elles 91 étant retenue dans la matrice 1 entre les secteurs 80 et les poinçons 3 et 4, et transpercée par l'aiguille centrale 75. Pendant la compression, de l'air est insufflé dans le conduit 90, afin de soulever le plateau de piston 84, ce qui permet de maintenir les secteurs 80 jointifs par le clivage produit par la paire 82 à l'interface conique 83. Quand toutefois l'extraction de la pastille 91 est réalisée, la pression d'air est commutée vers le conduit 89 supérieur, ce qui abaisse le plateau de piston 84 et la gaine 82, disjoint l'interface conique 83 et permet une légère ouverture des secteurs 80 vers l'extérieur, que suscite la pression à l'intérieur de la pastille 91. Quand le poinçon supérieur 3 a été relevé, l'abaissement de la matrice 1, conjointe à l'immobilité du poinçon inférieur 4, produit l'extraction de la pastille 91, avec des frottements réduits, grâce à l'écartement des secteurs 80, ce qui réduit énormément des risques de causer des dommages à la pastille 91, au cours de cette étape d'extraction, traditionnellement délicate, à cause de la variation brutale de contraintes de compression que la matière des pastilles 91 subit à mesure de leur sortie hors de la matrice 1. Le dispositif d'alimentation en air comprimé n'est pas original et peut comprendre des conduits souples, qu'on raccorde aux conduits 89 et 90.

La suite de la description porte sur le changement du dispositif en poudre pour former les pastilles, telles que 91.

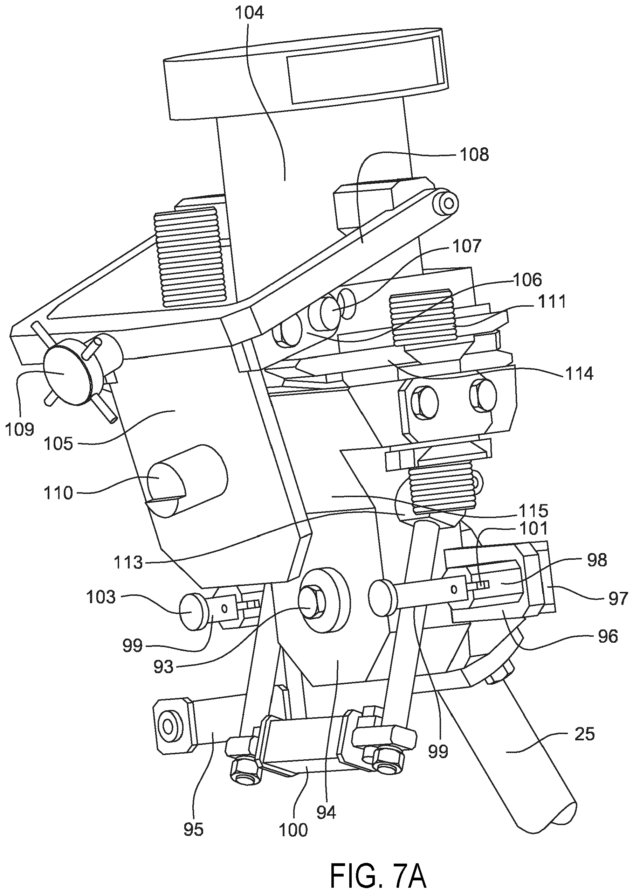

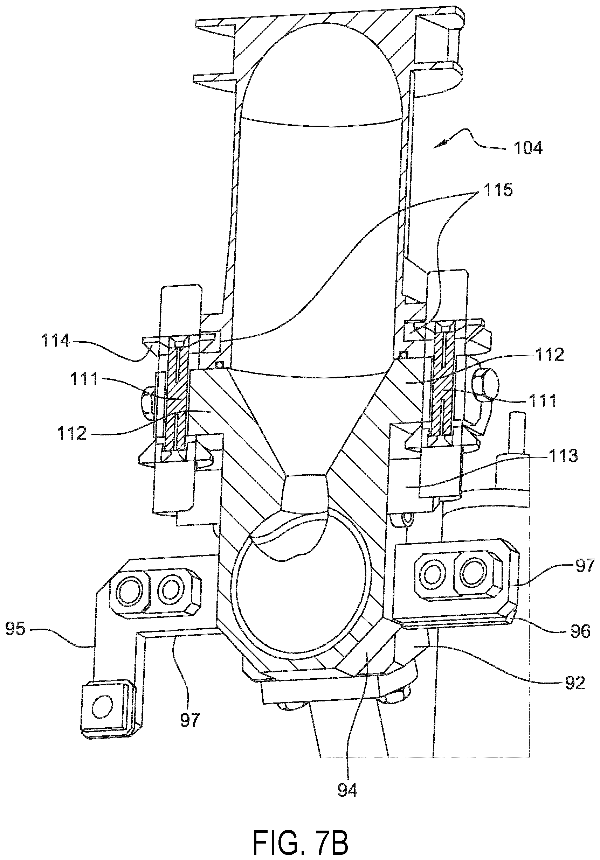

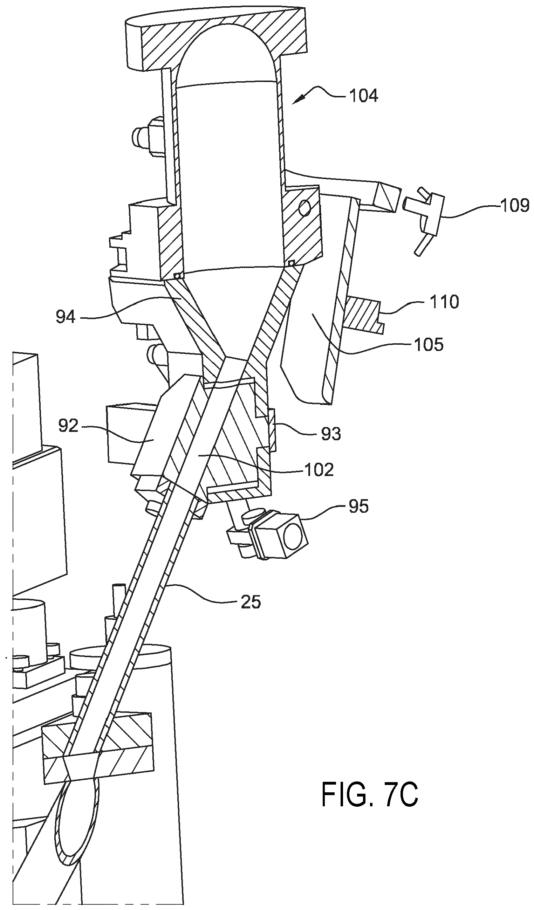

Les figures 7A, 7B et 7C représentent un module de chargement de poudre, monté au sommet du conduit d'alimentation 25. Ce module comprend un embout 92 assemblé de façon démontable par des vis 133 à une bride au sommet du conduit d'alimentation 25, et il comprend un axe 93 horizontal, autour duquel peut tourner un entonnoir 94. Une poignée 95 montée sur l'entonnoir 94 permet d'accomplir cette rotation. L'embout 92 et l'entonnoir 94 sont munis chacun d'une paires de pattes, respectivement 96 et 97, aptes à se superposer et opposées l'une à l'autre de part et d'autre de l'axe 93. Les pattes 96 et 97 présentent des évidements 98 se superposant quand elles sont alignées, et des verrous 99, montés sur une seconde poignée 100, possèdent des doigts 101, qu'on peut repousser dans les évidements 98 de manière à bloquer, en temps normal, des rotations de l'entonnoir 94 autour de l'axe 93. Le passage 134 de l'entonnoir 94 croise l'axe 93. L'assemblage peut prendre deux positions, dans l'une desquelles l'entonnoir 94 s'ouvre vers le haut (cette position est représentée sur les figures et correspond au fonctionnement normal de la machine) et l'orifice resserré du passage de l'entonnoir 94 est en position inférieure et se joint à l'intérieur du conduit d'alimentation 25 par un conduit de raccordement 102, le prolongeant à travers l'embout 92; et une position opposée, résultant d'une rotation à 180° de l'entonnoir 94, faisant venir chacune des pattes 97 devant l'autre patte 96 de l'embout 92. Pour passer d'une position à l'autre, il faut dégager les doigts 101 des évidements 98, en tirant sur des boutons 103 des verrous 99, tourner l'entonnoir 94 autour de l'axe 93 jusqu'à réaliser une nouvelle superposition des éléments 98, et repousser alors les boutons 103. Dans cette seconde position, le conduit d'alimentation 25 et son prolongement 102 sont fermés au sommet et l'entonnoir 94 s'ouvre vers le bas.

Un pot de remplissage 104 contient la poudre. A l'origine, il comporte une ouverture pouvant être accouplée à l'ouverture de l'entonnoir 94, et un couvercle 105 fermant l'ouverture. Le couvercle 105 est articulé au pot de remplissage 104 par une première chape 106, dont le pivot 107 est monté avec un léger jeu de débattement. Le pot de remplissage 104 porte une seconde chape d'articulation 108, dont l'axe de rotation est parallèle à celui de la chape d'articulation 106 précédente, et qui porte un cabestan de serrage 109 à son sommet. Quand le couvercle est fermé, l'extrémité du cabestan de serrage 109 peut venir devant une enclume de serrage 110 du couvercle 105 et la comprimer, ce qui maintient le couvercle 105 contre l'ouverture du pot de remplissage 104, tout en bloquant aussi la seconde chape d'articulation 108 par arc-boutement. Le pot de remplissage 104 est alors hermétiquement clos et peut être déplacé sans plus de précaution et accouplé à l'entonnoir 94, de la façon qu'on va maintenant décrire.

Les branches de la seconde poignée 100 agissent sur des tiges de verrouillage 111, traversant des consoles 112 de l'entonnoir 94, au moyen de cannes 113 de liaison. Quand la seconde poignée 100 est tirée, les cannes 113 déplacent les tiges de verrouillage 111 en les faisant coulisser dans les consoles 112, et une fourche 114, fixée au bout des tiges de verrouillage 111, devant l'ouverture de l'entonnoir 14, est éloignée de cette ouverture.

Cela est accompli dans la position où l'entonnoir 14 s'ouvre vers le bas. Le pot 104 est alors approché de lui, son couvercle 105 au sommet. Le cabestan 109 est desserré et l'ouverture du pot de remplissage 104 est mis à glisser sous celle de l'entonnoir 94. La fourche 114 entre alors dans des rainures latérales 115 établies sur le côté du pot de remplissage 104, non loin de son ouverture. A mesure que l'accouplement s'effectue par ce glissement, le couvercle 105 s'ouvre en étant retenu par une surface latérale de butée 126 de l'entonnoir 94. La seconde poignée 100 est ensuite replacée contre l'entonnoir 94 pour rapprocher la fourche 114 de l'ouverture de l'entonnoir 14 et retenir le pot de remplissage 104 sur elle; les verrous 99 sont ouverts; la première poignée 95 est actionnée pour basculer l'entonnoir 14 et le pot de remplissage 104 et l'amener à la position des figures 7A, 7B et 7C dans laquelle le contenu du pot de remplissage 104 tombe dans l'entonnoir 14 et s'écoule dans le conduit d'alimentation 25 ; et les verrous 99 peuvent être remis en place.

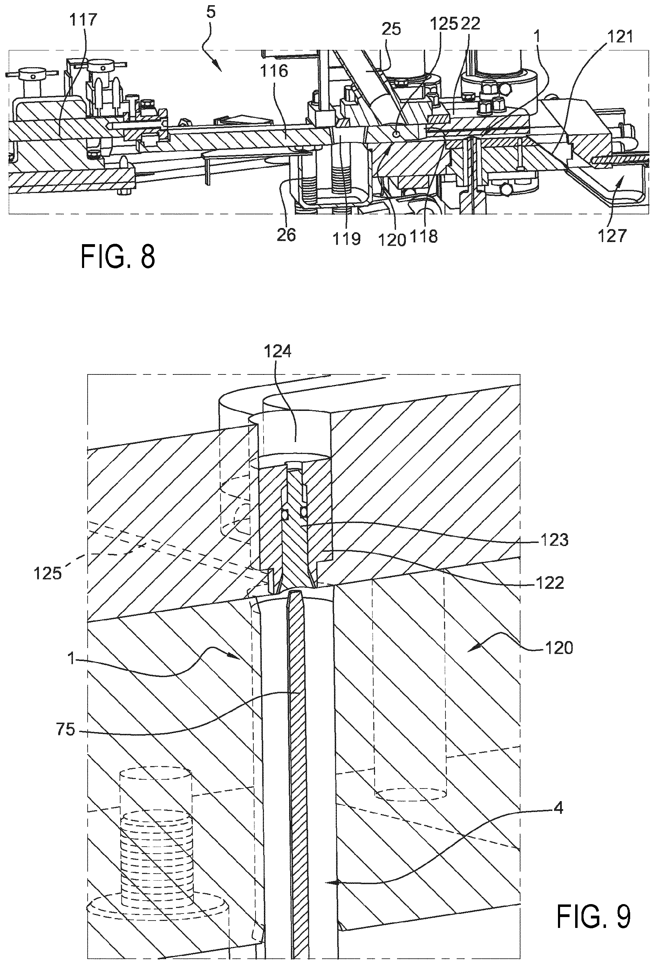

Un dernier aspect sera encore décrit au moyen des figures 8 et 9 : il concerne le sabot de remplissage 5.

Le sabot de remplissage 5 est encore un module, assemblé par les vis 72 au reste du dispositif. Il comprend une pièce mobile 116, déplacée dans le support 22 par un coulisseau 117 entraîné par le moteur 23. La pièce mobile 116 comporte un bec 118 à son extrémité opposée au coulisseau 117, un perçage 119 plus proche du coulisseau 117, et un dispositif de lubrification 120 entre les précédents. Le perçage 119 peut passer sur le pot de remplissage 26, sous le conduit d'alimentation 25 et sur la matrice 1 ; le bec 118 et le dispositif de lubrification 120 peuvent aussi passer sur la matrice 1, et le bec 118 peut arriver jusqu'à une goulotte d'évacuation 121 des pastilles 91, menant à un pot de récupération 127 des pastilles; le pot de récupération 127 est lui-même un module séparable, assemblé au plateau de matière 2 par des vis 128.

Les mouvements de va-et-vient du coulisseau 117 amènent le perçage 119 sous le conduit de remplissage 25, de manière que le perçage 119 s'emplisse de poudre, puis sur la matrice 1, pour que la quantité de poudre nécessaire pour former une pastille 91 s'y dépose, puis dans le pot de remplissage 26, pour y verser la poudre en excès; dans cette position, la matrice 1 est dégagée, et les poinçons 3 et 4 peuvent accomplir leur travail de mise en forme de la pastille 91 et d'extraction. La pièce mobile 116 revient alors, son bec 118 atteint la pastille 91 sortie de la matrice 1 et la repousse jusque dans la goulotte d'évacuation 121.

L'injecteur 120 passe au-dessus de la matrice 1 pendant ce mouvement de chasse de la pastille 91. Il délivre un peu de lubrifiant, qui tombe dans la matrice 1 et améliore son fonctionnement. Il comprend un piston 122 mobile dans un cylindre 123, sous l'action d'un conduit de liquide sous pression 124. Le lubrifiant s'écoule dans un capillaire 125, passant par le cylindre 123. Quand le liquide sous pression est donné, le piston 122 est déplacé vers le bas et son extrémité se dégage du cylindre 123, ce qui ouvre le capillaire 125 et permet à du lubrifiant de couler par la matrice 1. L'interruption de la pression ramène l'injecteur 120 à l'état de fermeture au moyen d'un ressort non représenté.

Le moteur supérieur 15 et le moteur inférieur 17 sont des moteurs-couples électriques. Leur transmission de mouvement comprend avantageusement un système de vis à rouleaux satellites, dans lequel le mouvement de rotation du moteur est transmis à un écrou, puis par une tige filetée, par l'intermédiaire de satellites, également filetés, disposé entre la tige et l'écrou, selon une disposition analogue à celle des engrenages planétaires. Ce dispositif a l'avantage de ne pas exiger de lubrification, tout en permettant la transmission d'efforts importants grâce à la superficie de contact importante.

Le mécanisme à vis à rouleaux satellites pourrait être remplacé par d'autres mécanismes transformant un effort à mouvement de rotation, en un effort à mouvement de translation.

## Revendications

1. Presse comprenant : une matrice (1) dans laquelle des pastilles (6, 11) peuvent être mises en forme par compression ; un premier poinçon dit poinçon supérieur (3) et un second poinçon dit poinçon inférieur (4), le poinçon supérieur et le poinçon inférieur étant alignés avec la matrice (1) et pénétrant dans la matrice par des extrémités opposées de la matrice pour comprimer les pastilles (6, 111) et les extraire de la matrice ; un plateau inférieur (8) auquel le poinçon inférieur est assujetti ; des colonnes (7) parallèles, également assujetties au plateau inférieur (8) ; un plateau de matrice (2) et un plateau de poinçon supérieur (13) auxquels la matrice (1) et le poinçon supérieur (3) sont respectivement assujettis, et qui sont enfilés en coulissant sur les colonnes ; un moteur supérieur (15) déplaçant le plateau de poinçon supérieur (13) et un moteur inférieur (17) déplaçant le plateau de matrice (2) par des parties d'actionnement (16, 20) ; **caractérisée en ce que** les parties d'actionnement (16, 20) des moteurs (15, 17) sont réunies au plateau de matrice (2) et au plateau de poinçon supérieur (13) par des liaisons démontables comprenant des vis, le poinçon supérieur (3) est réuni au plateau de poinçon supérieur (13) par des liaisons démontables comprenant des vis, le poinçon inférieur (4) est réuni au plateau inférieur (8) par des liaisons démontables comprenant des vis et **en ce que** la partie d'actionnement du moteur inférieur comprend une tige d'actionnement (20), et une genouillère (21) réunie au plateau de matrice (2) et à la tige d'actionnement (20) du moteur inférieur, la tige d'actionnement étant à un angle non nul avec les colonnes (7).

2. Presse selon la revendication 1, comprenant un plateau supérieur (14) assujetti aux colonnes (7), opposé au plateau inférieur (8) le long des colonnes et porteur du moteur supérieur (15).

3. Presse selon l'une quelconque des revendications 1 ou 2, le moteur inférieur (17) étant porté par le plateau inférieur (8).

4. Presse selon la revendication 3, le moteur inférieur étant porté par le plateau inférieur par un support latéral (18) réuni à une face périphérique (19) du plateau inférieur (8) par une liaison démontable comprenant des vis.

5. Presse selon l'une quelconque des revendications 1 à 4, la matrice faisant partie d'un bloc de matrice (56) détachable d'une partie complémentaire du plateau de matrice (2) et assujetti à ladite partie complémentaire (58) par une liaison à glissière (59) et une liaison démontable (61) comprenant des vis (129).

6. Presse selon la revendication 5, comprenant un support mobile (54) auquel le bloc de matrice (56), le poinçon inférieur (4) et le poinçon supérieur (3) sont réunis de façon démontable par des vis (55), lesdites vis (55) et le support mobile (54) étant toutefois retirés à un état de fonctionnement de la presse.

7. Presse selon l'une quelconque des revendications précédentes, le poinçon supérieur, la partie d'actionnement du moteur supérieur et le poinçon supérieur étant munis d'épaulements (63, 64, 67) d'appui sur le plateau de matrice et le plateau inférieur et la presse comprend des brides (62, 66) pressant sur les épaulements et vissées (130, 131) au plateau de matrice (2) et au plateau inférieur (8).

8. Presse selon l'une quelconque des revendications précédentes, les colonnes (7) étant vissées (29) au plateau inférieur (8).

9. Presse selon l'une quelconque des revendications précédentes, le plateau inférieur étant posé sur un socle (9) fixe par une liaison de pivot (10) et réuni au socle (9) par une liaison de verrouillage (11, 12, 73).

10. Presse selon la revendication 2, le plateau supérieur étant retenu entre des épaulements (32) des colonnes et des écrous (40) démontables vissés à des extrémités filetées (30) des colonnes (7).

11. Presse selon l'une quelconque des revendications précédentes, le moteur inférieur (17) et le moteur supérieur (15) étant électriques.

12. Presse selon la revendication 11, le moteur inférieur et le moteur supérieur étant reliés aux parties d'actionnement (16, 20) par des mécanismes transformant un effort à mouvement de rotation en un effort à mouvement de translation.

13. Presse selon l'une quelconque des revendications précédentes, comprenant un module de remplissage (5) de la matrice (1), le module de remplissage comprenant un support (22) assemblé au plateau de matrice (8) par des vis (72), une pièce mobile (116) par rapport au plateau et glissant sur le plateau de matrice (8) et comprenant un perçage (119), et un conduit d'alimentation (25), le perçage (119) étant disposé de façon à passer sous le conduit d'alimentation (25) et sur la matrice (1) pendant des déplacements de la pièce mobile (116).

14. Presse selon la revendication 13, la pièce mobile (116) comprenant un bec (118) à une extrémité, passant sur la matrice (1) et devant une goulotte d'évacuation (121) des pastilles mises en forme pendant les déplacements de la pièce mobile (116).

15. Presse selon l'une quelconque des revendications 13 ou 14, la pièce mobile (116) comprenant un injecteur de lubrifiant (120) passant sur la matrice (1) pendant les déplacements de la pièce mobile.

16. Presse selon l'une quelconque des revendications 13 à 15, comprenant un module de chargement, comprenant un embout (92) vissé à une partie supérieure du conduit d'alimentation (25), un entonnoir (94) articulé à l'embout autour d'un axe (93), l'entonnoir comprend un évidement croisant l'axe, et des moyens (111, 115) d'accrochage de pots de remplissage (104) sur une ouverture d'un passage (134) de l'entonnoir.

17. Presse selon l'une quelconque des revendications précédentes, comprenant une aiguille (75) coulissant dans le poinçon inférieur (4) et pénétrant dans la matrice (1).

18. Presse selon la revendication 17, l'aiguille (75) étant suspendue au plateau de matrice (8) par des tirants (69) et une barre transversale (76) joignant les tirants (69), et le poinçon inférieur (4) comprend un évidement (77) à travers lequel la barre transversale (76) s'étend et dans lequel elle est mobile.

19. Presse selon l'une quelconque des revendications précédentes, la matrice comprenant des secteurs (80) distincts et une gaine (82) entourant les secteurs, la gaine étant mobile en translation, la gaine et les secteurs étant réunis à une interface conique (83).

20. Procédé d'assemblage d'une presse selon l'une quelconque des revendications précédentes, consistant à introduire séparément des modules constituant la presse dans une enceinte où règne un milieu hostile à travers des passages reliant l'enceinte à un milieu extérieur, et à assembler les modules dans l'enceinte exclusivement par des télémanipulateurs.

21. Procédé d'assemblage selon la revendication 20, le plateau inférieur, le plateau de poinçon supérieur et le plateau de matrice appartenant à certains desdits modules tous différents de la presse.

22. Procédé d'assemblage selon la revendication 21, le moteur supérieur, le moteur inférieur, et optionnellement les colonnes, la genouillère, le bloc de matrice, le module de remplissage et le module de chargement appartenant à certains d'autres des modules, tous différents de la presse.

23. Procédé d'assemblage selon l'une quelconque des revendications 20 à 22, l'assemblage étant effectué exclusivement par des mouvements coulissants, des vissages, et éventuellement des insertions et des enlèvements d'entretoises temporaires.

## Patentansprüche

1. Presse, umfassend: eine Matrize (1), in der Pastillen (6, 11) durch Kompression geformt werden können; einen ersten Stempel, genannt oberer Stempel (3), und einen zweiten Stempel, genannt unterer Stempel (4), wobei der obere Stempel und der untere Stempel mit der Matrize (1) ausgerichtet sind und in die Matrize an entgegengesetzten Enden der Matrize eindringen, um die Pastillen (6, 111) zu komprimieren und sie aus der Matrize zu extrahieren; eine untere Platte (8), an der der untere Stempel befestigt ist; parallele Säulen (7), die ebenfalls an der unteren Platte (8) befestigt sind; eine Matrizenplatte (2) und eine obere Stempelplatte (13), an der die Matrize (1) beziehungsweise der obere Stempel (3) befestigt sind, und die verschiebbar auf die Säulen aufgefädelt sind; einen oberen Motor (15), der die obere Stempelplatte (13) verlagert, und einen unteren Motor (17), der die Matrizenplatte (2) verlagert mittels Betätigungsteilen (16, 20); **dadurch gekennzeichnet, dass** die Betätigungsteile (16, 20) der Motoren (15, 17) an der Matrizenplatte (2) und an der oberen Stempelplatte (13) durch demontierbare Verbindungen verbunden sind, die Schrauben umfassen, wobei der obere Stempel (3) mit der oberen Stempelplatte (13) durch demontierbare Verbindungen verbunden ist, die Schrauben umfassen, wobei der untere Stempel (4) mit der unteren Platte (8) durch demontierbare Verbindungen verbunden ist, die Schrauben umfassen, und dass das Betätigungsteil des unteren Motors eine Betätigungsstange (20) und einen Kniehebel (21) umfasst, der mit der Matrizenplatte (2) und mit der Betätigungsstange (20) des unteren Motors verbunden ist, wobei die Betätigungsstange bei einem Winkel ungleich Null mit den Säulen (7) ist.

2. Presse nach Anspruch 1, umfassend eine obere Platte (14), die an den Säulen (7) entgegengesetzt zur unteren Platte (8) entlang der Säulen befestigt und Träger des oberen Motors (15) ist.

3. Presse nach einem der Ansprüche 1 oder 2, wobei der untere Motor (17) durch die untere Platte (8) getragen ist.

4. Presse nach Anspruch 3, wobei der untere Motor durch die untere Platte mittels eines lateralen Trägers (18) getragen ist, der mit einer Umfangsfläche (19) der unteren Platte (8) durch eine demontierbare Verbindung verbunden ist, die Schrauben umfasst.

5. Presse nach einem der Ansprüche 1 bis 4, wobei die Matrize Teil eines Matrizenblocks (56) ist, der von einem komplementären Teil der Matrizenplatte (2) abtrennbar ist und an dem komplementären Teil (58) mittels einer Gleitverbindung (59) und einer demontierbaren Verbindung (61) befestigt ist, die Schrauben (129) umfasst.

6. Presse nach Anspruch 5, umfassend einen mobilen Träger (54), an dem der Matrizenblock (56), der untere Stempel (4) und der obere Stempel (3) in demontierbarer Weise mittels Schrauben (55) verbunden sind, wobei die Schrauben (55) und der mobile Träger (54) jedoch in einem Betriebszustand der Presse zurückgezogen sind.

7. Presse nach einem der vorhergehenden Ansprüche, wobei der obere Stempel, das Betätigungsteil des oberen Motors und der obere Stempel mit Schultern (63, 64, 67) zur Anlage an der Matrizenplatte und der unteren Platte ausgestattet sind, und die Presse Flansche (62, 66) umfasst, die auf die Schultern drücken und an die Matrizenplatte (2) und an die untere Platte (8) geschraubt (130, 131) sind.

8. Presse nach einem der vorhergehenden Ansprüche, wobei die Säulen (7) an die untere Platte (8) geschraubt (29) sind.

9. Presse nach einem der vorhergehenden Ansprüche, wobei die untere Platte mittels einer Gelenkverbindung (10) auf einen festen Sockel (9) positioniert und mit dem Sockel mittels einer Verriegelungsverbindung (11, 12, 73) verbunden ist.

10. Presse nach Anspruch 2, wobei die obere Platte zwischen Schultern (32) der Säulen und demontierbaren Muttern (40) gehalten ist, die auf Gewindeenden (30) der Säulen (7) geschraubt sind.

11. Presse nach einem der vorhergehenden Ansprüche, wobei der untere Motor (17) und der obere Motor (15) elektrisch sind.

12. Presse nach Anspruch 11, wobei der untere Motor und der obere Motor mit den Betätigungsteilen (16, 20) durch Mechanismen verbunden sind, die eine Rotationsbewegungskraft in eine Translationsbewegungskraft transformieren.

13. Presse nach einem der vorhergehenden Ansprüche, umfassend ein Modul (5) zum Füllen der Matrize (1), wobei das Füllmodul einen Träger (22) umfasst, der mittels Schrauben (72) an der Matrizenplatte (8) angebracht ist, ein Element (116), das bezüglich der Platte bewegbar ist und auf der Matrizenplatte (8) gleitet und eine Bohrung (119) umfasst, sowie eine Versorgungsleitung (25), wobei die Bohrung (119) derart angeordnet ist, dass sie unter der Versorgungsleitung (25) und auf der Matrize (1) während Verlagerungen des bewegbaren Elements (116) verläuft.

14. Presse nach Anspruch 13, wobei das bewegbare Element (116) einen Schnabel (118) an einem Ende umfasst, der auf der Matrize (1) und vor einer Rinne (121) zum Abführen der Pastillen verläuft, die während der Verlagerung des bewegbaren Elements (116) geformt sind.

15. Presse nach einem der Ansprüche 13 oder 14, wobei das bewegbare Element (116) einen Gleitmittelinjektor (120) umfasst, der während der Verlagerung des bewegbaren Teils auf der Matrize (1) verläuft.

16. Presse nach einem der Ansprüche 13 bis 15, umfassend ein Lademodul, umfassend ein Ansatzstück (92), das an einen oberen Teil der Versorgungsleitung (25) geschraubt ist, einen Trichter (94), der an dem Ansatzstück um eine Achse (93) angelenkt ist, wobei der Trichter eine Aussparung umfasst, die die Achse schneidet, sowie Mittel (111, 115) zur Ankopplung von Fülltöpfen (105) an einer Öffnung eines Durchgangs (134) des Trichters.

17. Presse nach einem der vorhergehenden Ansprüche, umfassend eine Nadel (75), die in dem unteren Stempel gleitet und in die Matrize (1) eindringt.

18. Presse nach Anspruch 17, wobei die Nadel (75) an der Matrizenplatte (8) mittels Zugelementen (69) und einer Querstange (76) aufgehängt ist, die die Zugelemente (69) verbindet, und wobei der untere Stempel (4) eine Aussparung (77) umfasst, durch die hindurch die Querstange (76) verläuft und in der sie bewegbar ist.

19. Presse nach einem der vorhergehenden Ansprüche, wobei die Matrize verschiedene Sektoren (80) und eine Ummantelung (82) umfasst, die die Sektoren umgibt, wobei die Ummantelung translationsbeweglich ist, wobei die Ummantelung und die Sektoren an einer konischen Grenzfläche (83) verbunden sind.

20. Verfahren zum Zusammenfügen einer Presse nach einem der vorhergehenden Ansprüche, umfassend das separate Einbringen der Module, die die Presse bilden, in eine Umhüllung, in der ein widriges Milieu herrscht, durch Durchgänge hindurch, die die Umhüllung mit einem äußeren Milieu verbinden, und das Zusammenfügen der Module in der Umhüllung ausschließlich mittels Telemanipulatoren.

21. Verfahren zum Zusammenfügen nach Anspruch 20, wobei die untere Platte, die obere Stempelplatte und die Matrizenplatte zu bestimmten der Module der Presse gehören, alle verschieden.

22. Verfahren zum Zusammenfügen nach Anspruch 21, wobei der obere Motor, der untere Motor und optional die Säulen, der Kniehebel, der Matrizenblock, das Füllmodul und das Lademodul zu bestimmten anderen der Module der Presse gehören, alle verschieden.

23. Verfahren zum Zusammenfügen nach einem der Ansprüche 20 bis 22, wobei das Zusammenfügen ausschließlich durch Gleitbewegungen, Verschraubungen und gegebenenfalls Einfügungen und Entnahmen von temporären Abstandshaltern erfolgt.

## Claims

1. A press comprising: a die (1) in which pellets (6, 91) can be shaped by compression; a first punch called an upper punch (3) and a second punch called a lower punch (4), the upper punch and the lower punch being aligned with the die (1) and penetrating the die by opposite ends of the die to compress the pellets (6, 91) and extract them from the die; a lower platen (8) to which the lower punch is fastened; parallel columns (7), also fastened to the lower platen (8); a die platen (2) and an upper punch platen (13) to which the die (1) and the upper punch (3) are respectively fastened, and which are slidingly placed onto the columns; an upper motor (15) displacing the upper punch platen (13) and a lower motor (17) displacing the die platen (2) by actuating parts (16, 20); **characterised in that** the actuating parts (16, 20) of the motors (15, 17) are joined to the die platen (2) and to the upper punch platen (13) by detachable connections comprising screws, the upper punch (3) is joined to the upper punch platen (13) by detachable connections comprising screws, the lower punch (4) is joined to the lower platen (8) by detachable connections comprising screws and **in that** the actuating part of the lower motor comprises an actuating rod (20), and a knuckle connector (21) joined to the die platen (2) and to the actuating rod (20) of the lower motor, the actuating rod being at a non-zero angle with the columns (7).

2. The press according to claim 1, comprising an upper platen (14) fastened to the columns (7), opposite to the lower platen (8) along the columns and carrying the upper motor (15).

3. The press according to any of claims 1 or 2, the lower motor (17) being carried by the lower platen (8).

4. The press according to claim 3, the lower motor being carried by the lower platen by a lateral support (18) joined to a peripheral face (19) of the lower platen (8) by a detachable connection comprising screws.

5. The press according to any of claims 1 to 4, the die being part of a die block (56) detachable from a complementary part of the die platen (2) and fastened to said complementary part (58) by a slider connection (59) and a detachable connection (61) comprising screws (129).

6. The press according to claim 5, comprising a movable support (54) to which the die block (56), the lower punch (4) and the upper punch (3) are detachably joined by screws (55), said screws (55) and the movable support (54) being however withdrawn at an operational state of the press.

7. The press according to any of the preceding claims, the upper punch, the actuating part of the upper motor and the upper punch being provided with shoulders (63, 64, 67) for bearing on the die platen and the lower platen and the press comprises flanges (62, 66) pressing on the shoulders and screwed (130, 131) to the die platen (2) and to the lower platen (8).

8. The press according to any of the preceding claims, the columns (7) being screwed (29) to the lower platen (8).

9. The press according to any of the preceding claims, the lower platen being laid on a fixed bracket (9) by a pivot connection (10) and joined to the bracket (9) by a locking connection (11, 12, 73).

10. The press according to claim 2, the upper platen being retained between shoulders (32) of the columns and detachable nuts (40) screwed to threaded ends (30) of the columns (7).

11. The press according to any of the preceding claims, the lower motor (17) and the upper motor (15) being electric.

12. The press according to claim 11, the lower motor and the upper motor being connected to the actuating parts (16, 20) by mechanisms transforming a rotational movement strain into a translational movement strain.

13. The press according to any of the preceding claims, comprising a filling module (5) of the die (1), the filling module comprising a support (22) assembled to the die platen (8) by screws (72), a piece (116) movable with respect to the platen and sliding on the die platen (8) and comprising a bore (119), and a feed duct (25), the bore (119) being disposed so as to pass under the feed duct (25) and on the die (1) during displacements of the movable piece (116).

14. The press according to claim 13, the movable piece (116) comprising a mouth (118) at one end, passing on the die (1) and in front of a spout (121) for discharging the pellets shaped during the displacements of the movable piece (116).

15. The press according to any of claims 13 or 14, the movable piece (116) comprising a lubricant injector (120) passing on the die (1) during the displacements of the movable piece.

16. The press according to any of claims 13 to 15, comprising a loading module, comprising a tip (92) screwed to an upper part of the feed duct (25), a funnel (94) hinged to the tip about an axis (93), the funnel comprises a recess intersecting the axis, and means (111, 115) for attaching filling bowls (104) on an opening of a passageway (134) of the funnel.

17. The press according to any of the preceding claims, comprising a needle (75) sliding in the lower punch (4) and penetrating the die (1).

18. The press according to claim 17, the needle (75) being suspended to the die platen (8) by tie beams (69) and a cross bar (76) joining the tie beams (69), and the lower punch (4) comprises a recess (77) through which the cross bar (76) extends and in which it is movable.

19. The press according to any of the preceding claims, the die comprising distinct sectors (80) and a sheath (82) surrounding the sectors, the sheath being translationally movable, the sheath and the sectors being joined at a conical interface (83).

20. A method for assembling a press according to any of the preceding claims, consisting in separately introducing modules making up the press in a space where a hostile medium prevails through passageways connecting the space to an external medium, and assembling the modules in the space by remote handlers exclusively.

21. The assembling method according to claim 20, the lower platen, the upper punch platen and the die platen belonging to some of said modules, all different from the press.

22. The assembling method according to claim 21, the upper motor, the lower motor, and optionally the columns, the knuckle connector, the die block, the filling module and the loading module belonging to some other modules, all different from the press.

23. The assembling method according to any of claims 20 to 22, the assembly being exclusively performed by sliding movements, screwings, and optionally inserting and removing temporary spacers.
